# EUROPÄISCHE PATENTANMELDUNG

(11) **EP 2 030 681 A1**
(43) Veröffentlichungstag der Anmeldung: **04.03.2009**
(21) Anmeldenummer: 08162728.3
(22) Anmeldetag: 21.08.2008
(51) Int. Cl.: B01J 41/04, B01J 45/00, C02F 1/42, C02F 1/68, C08F 8/32

(54) **Monodisperse borselektive Harze**

(30) Priorität: 29.08.2007 DE 102007040764
(71) Anmelder: LANXESS Deutschland GmbH, 51369 Leverkusen (DE)
(72) Erfinder: Schelhaas, Michael, 50733 Köln (DE); Vanhoorne, Pierre, 40789 Monheim (DE); Halle, Olaf, 51061 Köln (DE); Neumann, Stefan, 51375 Leverkusen (DE)

(57) **Zusammenfassung**

Die vorliegende Erfindung betrifft makroporöse, monodisperse borselektive Ionenaustauscher mit verbesserter Boraufnahmekinetik und verbesserter Borkapazität, enthaltend N-Methylglucamin-Strukturen, mit einem mittleren Durchmesser D zwischen 550 und 750 µm und einem Volumenanteil von Perlen zwischen 0,9 D und 1,1 D von mindestens 75 %.

## Beschreibung

Die vorliegende Erfindung betrifft monodisperse borselektive Harze enthaltend N-Methyl-glucamin-Strukturen sowie deren Anwendung zur Entfernung von Bor aus Flüssigkeiten.

Ionenaustauscher werden in vielen Bereichen eingesetzt, wie beispielsweise zur Enthärtung des Wassers, zur Entsalzung und Aufreinigung von wässrigen Lösungen, zur Abtrennung und Aufreinigung von Zucker- und Aminosäurelösungen und zur Herstellung von hochreinem Wasser in der Elektronik- und Pharmaindustrie. Allerdings können die konventionellen Ionenaustauscher schwer ionisierbare Verbindungen wie beispielsweise Siliziumdioxid und Borsäure nur bedingt aufnehmen.

Wegen seiner Toxizität darf Borsäure und/oder Borat im Trinkwasser nur im Spurenbereich vorhanden sein. Will man, wie in vielen Regionen der Welt wünschenswert, Trinkwasser aus Meerwasser gewinnen, stellt dies ein besonderes Problem dar. Meerwasser enthält ein Vielfaches der für Trinkwasser maximal zulässigen Konzentration an Borsäure und/oder Borat und die Techniken zur Entsalzung des Meerwassers (Umkehrosmose, konventionelle Ionenaustauscher) sind nicht in der Lage, diese Konzentration in den für Trinkwasser akzeptablen Bereich abzusenken.

Auch in der Elektronikindustrie ist Borsäure bzw. Borat unerwünscht, da das Element Bor zum Dotieren der Halbleiter verwendet wird. Im Herstellprozess der Siliziumchips müssen diese nach verschiedenen chemischen Reaktionen mit Wasser gereinigt werden. Hier erhöhen Spuren von Bor in Form von Borsäure und/oder Borat noch im ppb-Bereich die Zahl der fehlerhaften Chips deutlich. Wiederum sind die herkömmlichen Ionenaustauscher nicht in der Lage, Borsäure- bzw. Boratkonzentrationen im sub-ppb-Bereich zu garantieren.

Um den Anforderungen dieser Anwendungsgebiete gerecht zu werden, werden Harze gebraucht, die in der Lage sind, Borsäure und/oder Borat aufzunehmen. Für den Fall der Trinkwasseraufbereitung aus Meereswasser sollen diese Harze Borsäure bzw. Borat bevorzugt aufnehmen (borselektive Harze), damit andere Ionen, wie Natrium, Magnesium, Calcium, Chlorid, Nitrat, Sulfat, die im Trinkwasser in gewissen Mengen verbleiben müssen, nicht zusammen mit oder sogar bevorzugt zusätzlich zur Borsäure und/oder dem Borat aufgenommen werden.

Außerdem müssen die Harze eine sehr hohe Aufnahmekinetik für Borsäure bzw. Borat besitzen. Im Falle der Trinkwasseraufbereitung müssen große Volumina an Wasser in kurzer Zeit bereitgestellt werden, was zu sehr hohen Durchflussraten des Wassers durch das Ionenaustauscherbett führt. Im Falle der Elektronikindustrie reduzieren die sehr niedrigen Konzentrationen an Borsäure bzw. Borat die Häufigkeit der Kontakte zwischen Borsäure/Borat und borselektiven Gruppen dramatisch.

Um effizient arbeiten zu können muss jeder solcher Kontakt zur sofortigen Aufnahme der Borsäure bzw. des Borats führen.

Schließlich müssen die Harze in der Lage sein, nennenswerte Mengen an Borsäure bzw. Borat pro Volumeneinheit Harz aufzunehmen, um einen häufigen Austausch des Harzes vorzubeugen.

Borselektive Harze sind in der Patentliteratur bereits beschrieben. So erwähnen beispielsweise USA 3 567 369 und DD 279 377 die Herstellung von borselektiven Harzen durch Umsetzung von chlormethylierten Styrol/Divinylbenzol-Perlpolymerisaten mit Zuckerderivaten.

Diese Harze sind zwar borselektiv, zeichnen sich aber vor allem im Bereich des UPW-Wassers (Ultra Pure Water) durch eine unzureichende Aufnahmekinetik und durch eine niedrige Aufnahmekapazität für Bor aus.

In JP 2002226517 A werden borselektive Harze mit einem mittleren Durchmesser < 450 µm und einer engen Teilchengrößenverteilung beansprucht. Diese Harze zeigen eine im Vergleich mit den herkömmlichen borselektiven Harzen verbesserte Aufnahmekapazität für Bor, die aber für viele Anwendungen immer noch unzureichend ist. Außerdem führen solche Harze mit kleinem Perlendurchmesser zu einem höheren Druckverlust in den Säulen, was von Nachteil für Anwendungen ist, wo große Wassermengen behandelt werden müssen, wie beispielsweise bei der Entsalzung von Meereswasser.

Es besteht also für die Wasseraufbereitung ein Bedarf an borselektiven Ionenaustauschern mit hoher Kapazität und hervorragender Aufnahmekinetik.

Es wurde jetzt überraschend gefunden, dass entgegen der Lehre aus JP 2002226517 solche Harze durch die Kombination von Porosität, Monodispersität und mittlerem Durchmesser zwischen 550 und 750 µm dargestellt werden können und zu deutlich besseren Adsorptionsraten für Bor führen.

Die vorliegende Erfindung betrifft deshalb makroporöse, monodisperse Ionenaustauscher, zur selektiven Adsorption von Bor, dadurch gekennzeichnet, dass diese N-Methylglucamin-Strukturen enthalten und einen mittleren Durchmesser D zwischen 550 und 750 µm sowie einen Volumenanteil von mindestens 75 % der Perlen zwischen 0,9 D und 1,1 D aufweisen und die Monodispersität durch Sieben heterodisperser Harze, durch Verdüsungs- oder durch Saat-Zulauf-Verfahren erzielt wird.

Bor bzw. borselektiv im Sinne der vorliegenden Erfindung bedeutet Borsäure oder ihre Salze mit Alkalimetallen oder Erdalkalimetallen (die Borate), bevorzugt mit Natrium, Kalium oder Magnesium bzw. selektiv für diese Verbindungen.

Zur Herstellung der erfindungsgemäßen borselektiven Ionenaustauscher enthaltend N-Methylglucamin-Strukturen werden bevorzugt zunächst nicht-funktionalisierte Perlpolymerisate durch Suspensionspolymerisation nicht funktionalisierter Monomere erzeugt und diese in einem oder mehreren nachgeschalteten Schritt(en) mit N-Methylglucamin-Strukturen versehen.

Als nicht funktionalisierte Monomere werden im Allgemeinen monoethylenisch ungesättigte aromatische Monomere, bevorzugt Styrol, Methylstyrol, Vinyltoluol, t-Butylstyrol oder Vinylnaphthalin eingesetzt. Gut geeignet sind auch Mischungen dieser Monomere sowie Mischungen von monoethylenisch ungesättigten, aromatischen Monomeren mit bis zu 20 Gew.-% anderer monoethylenisch ungesättigter Monomere, bevorzugt Chlorstyrol, Bromstyrol, Acrylnitril, Methacrylnitril, Ester der Acrylsäure oder Methacrylsäure wie Methylmethacrylat, Ethylmethacrylat, Methylacrylat, Ethylacrylat, Isopropylmethacrylat, Butylacrylat, Butylmethacrylat, Hexylmethacrylat, 2-Ethylhexylacrylat, Ethylhexylmethacrylat, Decylmethacrylat, Dodecylmethacrylat, Stearylmethacrylat, oder iso-Bomylmethacrylat. Insbesondere bevorzugt sind Styrol und Vinyltoluol.

Den Monomeren werden Vernetzer beigemischt. Vernetzer sind im Allgemeinen multiethylenisch ungesättigte Verbindungen, bevorzugt Divinylbenzol, Divinyltoluol, Trivinylbenzol, Ethylenglykoldimethacrylat, Ethylenglykoldiacrylat, Ethylenglykoldivinylether, Diethylenglykoldivinylether, Butandioldivinylether, Octadien oder Triallylcyanurat. Besonders bevorzugt sind die vinylaromatischen Vernetzer Divinylbenzol oder Trivinylbenzol. Ganz besonders bevorzugt ist Divinylbenzol. Die Vernetzer können alleine oder als Gemisch verschiedener Vernetzer eingesetzt werden. Die Gesamtmenge einzusetzender Vernetzer beträgt in der Regel 0,1 bis 80 Gew.-%, bevorzugt 0,5 bis 60 Gew.-%, besonders bevorzugt 1 bis 40 Gew.-%, bezogen auf die Summe der ethylenisch ungesättigten Verbindungen.

Zur Erzeugung der Porenstruktur im nicht funktionellen Perlpolymerisat werden den Monomeren Porenbildner - so genannte Porogene - zugesetzt. Als Porogene werden bevorzugt organische Verdünnungsmittel eingesetzt. Besonders bevorzugt werden solche organischen Verdünnungsmittel, die sich zu weniger als 10 Gew.-%, vorzugsweise weniger als 1 Gew.-% in Wasser lösen, eingesetzt. Insbesondere geeignete Porogene sind Toluol, Ethylbenzol, Xylol, Cyclohexan, Oktan, Isooktan, Decan, Dodekan, Isododekan, Methylisobutylketon, Ethylacetat, Butylacetat, Dibutylphtalat, n-Butanol, 4-Methyl-2-pentanol und n-Octanol. Ganz besonders bevorzugt sind Toluol, Cyclohexan, Isooktan, Isododekan, 4-Methyl-2-pentanol und Methylisobutylketon.

Als Porogen können aber auch unvernetzte, lineare oder verzweigte Polymere eingesetzt werden, bevorzugt Polystyrol und Polymethylmethacrylat.

Das Porogen wird üblicherweise in Mengen von 10 bis 200 Gew.-%, bevorzugt 25 bis 150 Gew.-%, besonders bevorzugt 40 bis 100 Gew.-%, jeweils bezogen auf die Summe der ethylenisch ungesättigten Verbindungen, eingesetzt.

Bei der Herstellung der nicht funktionellen Perlpolymerisate werden die oben genannten Monomere in einer weiteren bevorzugten Ausführungsform der vorliegenden Erfindung in Anwesenheit eines Dispergierhilfsmittels unter Verwendung eines Initiators in wässriger Suspension polymerisiert.

Als Dispergierhilfsmittel werden bevorzugt natürliche oder synthetische wasserlösliche Polymere eingesetzt. Besonders bevorzugt werden Gelatine, Stärke, Polyvinylalkohol, Polyvinylpyrrolidon, Polyacrylsäure, Polymethacrylsäure oder Copolymerisate aus (Meth)acrylsäure oder (Meth)acrylsäureestern eingesetzt. Ganz besonders bevorzugt werden Gelatine oder Cellulosederivate, insbesondere Celluloseester oder Celluloseether, insbesondere besonders bevorzugt Carboxymethylcellulose, Methylcellulose, Hydroxyethylcellulose oder Methylhydroxyethylcellulose eingesetzt. Die Einsatzmenge der Dispergierhilfsmittel beträgt im Allgemeinen 0.05 bis 1 %, vorzugsweise 0.1 bis 0.5 %, bezogen auf die Wasserphase.

In einer weiteren bevorzugten Ausführungsform der vorliegenden Erfindung werden Initiatoren eingesetzt. Geeignete Initiatoren sind Verbindungen, die bei Temperaturerhöhung freie Radikale bilden. Bevorzugt werden Peroxyverbindungen, besonders bevorzugt Dibenzoylperoxid, Dilaurylperoxid, Bis-(p-chlorbenzoyl)peroxid, Dicyclohexylperoxydicarbonat und tert.-Amylperoxy-2-ethylhexan sowie Azoverbindungen, besonders bevorzugt 2,2'-Azobis(isobutyronitril) oder 2,2'-Azobis(2-methylisobutyronitril) oder auch aliphatische Peroxyester, bevorzugt tert.-Butylperoxyacetat, tert.-Butylperoxyisobutyrat, tert.-Butyl-peroxypivalat, tert.-Butylperoxyoctoat, tert.-Butylperoxy-2-ethylhexanoat, tert.-Butylperoxyneo-decanoat, tert.-Amylperoxypivalat, tert.-Amylperoxyoctoat, tert.-Amylperoxy-2-ethylhexanoat, tert.-Amylperoxyneodecanoat, 2,5-Bis(2-ethylhexanoylperoxy)-2,5-dimethylhexan, 2,5-Dipivaloyl-2,5-dimethylhexan, 2,5-Bis(2-neodecanoylperoxy)-2,5-dimethylhexan, Di-tert.-butylperoxyazelat und Di-tert.-amylperoxyazelat eingesetzt.

Im Falle des Einsatzes von Initiatoren werden diese im Allgemeinen in Mengen von 0,05 bis 6,0 Gew.-%, vorzugsweise 0,1 bis 5,0 Gew.-%, besonders bevorzugt 0,2 bis 2 Gew.-%, bezogen auf die Summe der ethylenisch ungesättigten Verbindungen, angewendet.

Die Wasserphase kann gegebenenfalls ein Puffersystem enthalten, welches den pH-Wert der Wasserphase auf einen Wert zwischen 12 und 3, vorzugsweise zwischen 10 und 4 einstellt. Besonders gut geeignete Puffersysteme enthalten Phosphatsalze, Acetatsalze, Citratsalze oder Boratsalze.

Es kann vorteilhaft sein, einen in der wässrigen Phase gelösten Inhibitor einzusetzen. Als gegebenenfalls einzusetzende Inhibitoren kommen sowohl anorganische als auch organische Stoffe in Frage. Bevorzugte anorganische Inhibitoren sind Stickstoffverbindungen, besonders bevorzugt Hydroxylamin, Hydrazin, Natriumnitrit oder Kaliumnitrit. Bevorzugte organische Inhibitoren sind phenolische Verbindungen, besonders bevorzugt Hydrochinon, Hydrochinonmonomethylether, Resorcin, Brenzkatechin, tert.-Butylbrenzkatechin oder Kondensationsprodukte aus Phenolen mit Aldehyden. Weitere bevorzugte organische Inhibitoren sind stickstoffhaltige Verbindungen, besonders bevorzugt Diethylhydroxylamin oder Isopropylhydroxylamin. Resorcin wird als Inhibitor insbesondere bevorzugt. Die Konzentration des gegebenenfalls einzusetzenden Inhibitors beträgt 5 - 1000 ppm, vorzugsweise 10 - 500 ppm, besonders bevorzugt 20 - 250 ppm, bezogen auf die wässrige Phase.

Die organische Phase kann als Tröpfchen durch Rühren bzw. durch Verdüsung (Jetting) in die wässrige Phase dispergiert werden. Unter organischer Phase wird die Mischung aus Monomer(en), Vernetzter(n), Porogen(en) und Initiator(en) verstanden. Bei der klassischen Dispersionspolymerisation werden die organischen Tröpfchen durch Verrühren erzeugt. Im 4 Liter Maßstab werden typischerweise Rührerdrehzahlen von 250 bis 400 UpM verwendet. Werden die Tröpfchen durch Verdüsung erzeugt, empfiehlt es sich, zur Erhaltung des einheitlichen Tröpfchendurchmessers die organischen Tröpfchen zu verkapseln. Verfahren zur Mikroverkapselung von verdüsten organischen Tröpfchen werden beispielsweise in EP-A 0 046 535 beschrieben, deren Inhalt in Bezug auf die Mikroverkapselung von der vorliegenden Anmeldung mit umfasst wird.

Der mittlere Durchmesser der gegebenenfalls verkapselten Monomertröpfchen beträgt 10-1000 µm, vorzugsweise 100 - 1000 µm.

Das Verhältnis der organischen Phase zur wässrigen Phase beträgt in der Regel 1:20 bis 1:0,6, bevorzugt 1:10 bis 1:1, besonders bevorzugt 1:5 bis 1:1,2.

Die organische Phase kann aber auch im so genannten Seed-Feed-Verfahren (Saat-Zulauf-Verfahren) zu einer Suspension von Saatpolymerisaten, die die organische Phase aufnehmen, zugegeben werden, gemäß EP-A 0 617 714 deren Lehre von der vorliegenden Anmeldung mit umfasst wird. Der mittlere Durchmesser der mit der organischen Phase gequollenen Saatpolymerisate beträgt 5-1200 µm, vorzugsweise 20 - 1000 µm. Das Verhältnis der Summe organische Phase + Saatpolymerisat zur wässrigen Phase beträgt in der Regel 1:20 bis 1:0,6, bevorzugt 1:10 bis 1:1, besonders bevorzugt 1:5 bis 1:1,2.

Die Polymerisation der Monomere wird bei erhöhter Temperatur durchgeführt. Die Polymerisationstemperatur richtet sich nach der Zerfallstemperatur des Initiators und liegt typischerweise im Bereich von 50 bis 150°C, vorzugsweise 60 bis 120°C. Die Polymerisationsdauer liegt bei 30 Minuten bis 24 Stunden, bevorzugt 2 bis 15 Stunden.

Am Ende der Polymerisation werden die nicht funktionellen Perlpolymerisate von der wässrigen Phase abgetrennt, beispielsweise auf einer Nutsche, und gegebenenfalls getrocknet.

Die Umsetzung des Perlpolymerisates zu einem N-Methylglucamin-Strukturen enthaltenden borselektiven Ionenaustauscher kann durch Chlormethylierung und anschließende Aminierung mit N-Methyl-Glucamin erfolgen.

Zur Chlormethylierung wird vorzugsweise Chlormethylmethylether eingesetzt. Der Chlormethylmethylether kann in ungereinigter Form eingesetzt werden, wobei er als Nebenkomponenten beispielsweise Methylal und Methanol enthalten kann. Der Chlormethylmethylether wird vorzugsweise im Überschuss eingesetzt und wirkt nicht nur als Reaktant sondern auch als Lösungsmittel und Quellmittel. Die Anwendung eines zusätzlichen Lösungsmittels ist daher im Allgemeinen nicht erforderlich. Die Chlormethylierungsreaktion wird durch Zugabe einer Lewissäure katalysiert. Bevorzugte Katalysatoren sind Eisen(III)chlorid, Zinkchlorid, Zinn(IV)chlorid oder Aluminiumchlorid. Die Reaktionstemperatur kann im Bereich von 40 bis 80°C liegen. Bei druckloser Fahrweise ist ein Temperaturbereich von 50 bis 60°C besonders günstig. Während der Reaktion können die flüchtigen Bestandteile, wie Salzsäure, Methanol und Methylal durch Abdampfen entfernt werden. Zur Entfernung des Rest-Chlormethylmethylethers sowie zur Reinigung des Chlormethylats kann mit Methylal, Methanol und schließlich mit Wasser gewaschen werden.

Weitere Verfahren zur Chlormethylierung von Perlpolymerisaten werden z.B. in DD 250 129 A1 und EP-A 1 273 435 beschrieben.

Zur Herstellung der borselektiven Ionenaustauscher wird das chlormethylierte Copolymerisat mit N-Methylglucamin umgesetzt.

Zur vollständigen Umsetzung des chlormethylierten Copolymerisates sind mindestens 1 mol N-Methylglucamin, bezogen auf 1 mol Chlor im Chlormethylat erforderlich. Bevorzugt wird ein N-Methylglucamin-Überschuß von 1,05 bis 5 mol Amin pro mol Chlor. Besonders bevorzugt sind 1,1 bis 2,5 mol N-Methylglucamin pro mol Chlor.

Die Aminierungsreaktion erfolgt in Anwesenheit eines geeigneten Lösungsmittels. Bevorzugt sind Lösungsmittel, die das chlormethylierte Copolymerisat aufquellen und gleichzeitig das N-Methylglucamin zu mehr als 100 g pro Liter lösen. Besonders bevorzugte Lösungsmittel sind Dimethylformamid, Dimethylsulfoxid oder Gemische von Wasser mit C1-C3 Alkoholen. Ganz besonders bevorzugt sind Dimethylformamid, Wasser/Methanol- oder Wasser/Ethanol-Gemische.

Während der Aminierung quillt das Harz auf. Daher ist eine Mindestmenge an Lösungsmittel notwendig, um den Ansatz rührfähig zu halten. Pro Gramm chlormethyliertes Perlpolymerisat werden bevorzugt mindestens 2 Gramm, besonders bevorzugt 2,5 bis 5 Gramm Lösungsmittel eingesetzt.

Die Temperatur, bei der die Aminierung durchgeführt wird, kann im Bereich zwischen Raumtemperatur und 160°C liegen. Bevorzugt werden Temperaturen zwischen 70 und 120°C, besonders bevorzugt im Bereich zwischen 70 und 110°C, verwandt.

Nach der Aminierung wird der erhaltene Anionenaustauscher mit VE-Wasser (voll entsalztes Wasser) bei Temperaturen von 20 bis 120°C, vorzugsweise von 50 bis 90°C gewaschen. Das Produkt wird beispielsweise durch Absetzen lassen oder Filtrieren isoliert.

Die erfindungsgemäß erforderliche Monodispersität kann in einer bevorzugten Ausführungsform der vorliegenden Erfindung durch Sieben herkömmlicher, das heißt durch Suspensionspolymerisation unter Rühren hergestellter N-Methylglucamin-Gruppen enthaltender Ionenaustauscher erzielt werden.

In einer weiteren bevorzugten Ausführungsform der vorliegenden Erfindung kann ein monodisperses, vernetztes vinylaromatisches Grundpolymerisat nach den aus der Literatur bekannten Verfahren hergestellt werden. Beispielsweise werden solche Verfahren in US-A 4 444 961, EP-A 0 046 535, US 4 419 245 oder WO 93/12167 beschrieben, deren Inhalte von der vorliegenden Anmeldung diesbezüglich vollumfänglich mit umfasst werden.

Erfindungsgemäß besonders bevorzugt werden monodisperse Perlpolymerisate und die daraus herzustellenden monodispersen N-Methylglucamin-Gruppen enthaltenden Ionenaustauscher durch Verdüsungs-(Jetting) oder Saat-Zulauf-Verfahren (seed/feed Prozess) erhalten

Die erfindungsgemäßen, monodispersen, borselektiven Harze weisen einen mittleren Durchmesser D zwischen 550 µm und 750 µm auf. Zur Bestimmung des mittleren Durchmessers und der Teilchengrößenverteilung sind übliche Methoden, wie Siebanalyse oder Bildanalyse geeignet. Als mittlerer Durchmesser D wird im Sinne der vorliegenden Erfindung der 50%-Wert (Ø (50)) der Volumenverteilung verstanden. Der 50%-Wert (Ø (50) der Volumenverteilung gibt den Durchmesser an, der von 50 Vol.-% der Teilchen unterschritten wird.

Im Gegensatz zu der aus dem Stand der Technik bekannten heterodispersen Teilchengrößenverteilung werden in der vorliegenden Anmeldung als monodispers Teilchengrößenverteilungen bezeichnet, bei denen mindestens 75 Volumen-%, bevorzugt mindestens 85 Volumen-%, besonders bevorzugt mindestens 90 Volumen-% der Teilchen einen Durchmesser besitzen, der in dem Intervall mit der Breite von ± 10 % des mittleren Durchmessers um den mittleren Durchmesser herum liegt.

Zum Beispiel bei einem Perlpolymerisat mit mittlerem Durchmesser von 0,5 mm liegen mindestens 75 Volumen-%, bevorzugt mindestens 85 Volumen-%, besonders bevorzugt mindestens 90 Volumen-% in einem Größenintervall zwischen 0,45 mm und 0,55 mm, bei einem Stoff mit mittlerem Durchmesser von 0,7 mm liegen mindestens 75 Volumen-%, bevorzugt mindestens 85 Volumen-%, besonders bevorzugt mindestens 90 Volumen-% in einem Größenintervall zwischen 0,77 mm und 0,63 mm.

Die erfindungsgemäßen, monodispersen, borselektiven Harze weisen eine makroporöse Struktur auf. Unter makroporöse Struktur wird im Sinne der vorliegenden Erfindung gemäß IUPAC eine Struktur mit Poren verstanden, die einen mittleren Durchmesser größer als 50 nm aufweisen. Bevorzugt weisen die erfindungsgemäßen, makroporösen, borselektiven Harze ein Gesamtporenvolumen, gemessen am getrockneten Harz mit der Methode der Quecksilberintrusionsporosimetrie, von mindestens 0,1 cm³/g, besonders bevorzugt mindestens 0,5 cm³/g auf.

Die erfindungsgemäßen Ionenaustauscher eignen sich hervorragend zur Adsorption von Bor aus Flüssigkeiten, bevorzugt aus Trinkwasser, Meereswasser oder Prozesswasser in oder aus der Elektronikindustrie.

### Beispiele

**Beispiel 1:** Herstellung eines heterodispersen, makroporösen, borselektiven Harzes gemäß JP 2002226517 (Stand der Technik, nicht erfindungsgemäß).

In einem 5 Liter Druckreaktor wurden 339 g eines wasserfeuchten, heterodispersen, chlormethylierten Perlpolymerisates ( Wassergehalt 25 Gew.- %), 1407 g Ethanol, 500 g N-Methyl-D-Glucamin und 428 g Wasser vorgelegt. Der Reaktor wurde verschlossen und sein Inhalt innerhalb 1,5 h auf 90 °C erhitzt. Die Reaktionsmischung wurde 12 h bei 90 °C gerührt und anschließend abgekühlt. Das aminierte Produkt wurde auf einer Nutsche abgesaugt, 2 Mal mit 2 Liter entionisiertem Wasser, 1 Mal mit 2 Liter 5 Gew.-%iger Schwefelsäure und nochmals mit 4 Liter VE-Wasser gewaschen. Man erhielt 880 ml eines wasserfeuchten, heterodispersen, makroporösen borselektiven Harzes.

Von dem Harz wurde anschließend die Fraktion zwischen 355 und 450 µm herausgesiebt.

Man erhielt ein borselektives Harz gemäß JP 2002226517 mit folgenden Kenngrößen:

Mittlerer Durchmesser D: 420 µm

Volumenanteil von Perlen zwischen 0,9 D und 1,1 D: 65 % zwischen 378 µm und 462 µm.

### Beispiel 2: Herstellung eines monodispersen, makroporösen, borselektiven Harzes (erfindungsgemäß).

### 2a) Herstellung eines monodispersen, makroporösen Perlpolymerisates

In einem 101 Glasreaktor wurden 3000 g VE-Wasser vorgelegt und eine Lösung aus 10 g Gelatine, 16 g di-Natriumhydrogenphosphatdodekahydrat und 0,73 g Resorcin in 320 g VE-Wasser hinzugefüllt und durchmischt. Die Mischung wurde auf 25 °C temperiert. Unter Rühren wurde anschließend eine Mischung aus 3200 g durch Verdüsung (Jetting) gewonnenen, mikroverkapselten Monomertröpfchen mit enger Teilchengrössenverteilung aus 3,6 Gew.-% Divinylbenzol und 0,9 Gew.-% Ethylstyrol (eingesetzt als handelsübliches Isomerengemisch aus Divinylbenzol und Ethylstyrol mit 80 % Divinylbenzol), 0,5 Gew.-% Dibenzoylperoxid, 56,2 Gew.-% Styrol und 38,8 Gew.-% Isododekan (technisches Isomerengemisch mit hohem Anteil an Pentamethylheptan) gegeben, wobei die Mikrokapsel aus einem mit Formaldehyd gehärteten Komplexkoazervat aus Gelatine und einem Copolymer aus Acrylamid und Acrylsäure bestand, und 3200 g wässriger Phase mit einem pH-Wert von 12 zugesetzt. Der mittlere Durchmesser der Monomertröpfchen betrug 460 µm.

Der Ansatz wurde unter Rühren durch Temperaturerhöhung nach einem Temperaturprogramm bei 25°C beginnend und bei 95°C endend auspolymerisiert. Der Ansatz wurde abgekühlt, über ein 32 µm-Sieb gewaschen und anschließend im Vakuum bei 80°C getrocknet. Man erhielt 1893 g eines kugelförmigen Polymerisates mit einem mittleren Durchmesser von 440 µm, enger Teilchengrößenverteilung und glatter Oberfläche.

Das Perlpolymerisat war in der Aufsicht kreidig weiß und wies eine Schüttdichte von ca. 370 g/l auf.

### 2b) Chlormethylierung des monodispersen, makroporösen Perlpolymerisates aus 2a)

In einem 2 Liter Sulfierkolben wurden 1120 ml einer Mischung aus Monochlordimethylether, Methylal und Eisen(III)chlorid (14,8 g/l) vorgelegt und anschließend 240 g Perlpolymerisat aus 2a) zugegeben. Das Gemisch wurde auf 50 °C erhitzt und 6 h unter Rückfluss im Bereich von 50-55 °C gerührt. Während der Reaktionszeit wurden Salzsäure und leicht siedende Organika abgetrieben bzw. abdestilliert. Anschließend wurde die Reaktionssuspension hintereinander mit 1200 ml Methanol, 2400 ml Methylal, 3 Mal mit 1200 ml Methanol und zum Schluss mit VE-Wasser intensiv gewaschen. Man erhielt 590 ml wasserfeuchtes, monodisperses, makroporöses, chlormethyliertes Perlpolymerisat mit einem Chlorgehalt von 20,1 Gew.-%.

### 2c) Umsetzung des monodispersen, chlormethylierten, makroporösen Perlpolymerisates aus 2b) zu einem monodispersen, makroporösen, borselektiven Harz

In einem 5 Liter Druckreaktor wurden 339 g des wasserfeuchten chlormethylierten Perlpolymerisates aus 2b) ( Wassergehalt 25 Gew.- %), 1407 g Ethanol, 500 g N-Methyl-D-Glucamin und 428 g Wasser vorgelegt. Der Reaktor wurde verschlossen und sein Inhalt innerhalb 1,5 h auf 90 °C erhitzt. Die Reaktionsmischung wurde 12 h bei 90 °C gerührt und anschließend abgekühlt. Das aminierte Produkt wurde auf einer Nutsche abgesaugt, 2 Mal mit 2 Liter VE-Wasser, 1 Mal mit 2 Liter 5 Gew.-%iger Schwefelsäure und nochmals mit 4 Liter VE-Wasser gewaschen. Man erhielt 880 ml eines wasserfeuchten, monodispersen, makroporösen borselektiven Harzes.

Menge an schwachbasischen Gruppen pro Liter Harz: 0,87 mol.

### Mittlerer Durchmesser D: 572 µm

Volumenanteil von Perlen zwischen 0,9 D und 1,1 D: 87 % zwischen 515 µm und 629 µm.

### Beispiel 3: Bestimmung der Boraufnahmekinetik der borselektiven Harze

Jedes zur Untersuchung anstehende Harz wurde wie folgt behandelt:

100 ml Harz wurden in einer Säule nacheinander mit 500 ml 6,5 Gew.-%iger Salzsäure, 500 ml VE-Wasser, 500 ml 4 Gew.-%iger Natronlauge und 500 ml VE-Wasser eluiert.

Nach Ausbau aus der Säule wurde das Harz bis zur Volumenkonstanz eingerüttelt. Davon wurden 20 ml mit einem Saugrohr trocken gesaugt und in einem 1 Liter Becherglas mit Rührvorrichtung vorgelegt.

Danach wurde das Rührwerk mit einer konstanten Drehzahl von 175 UpM eingeschaltet.

Anschließend wurden zügig 500ml einer Borlösung (Gehalt 2,5g Borsäure pro Liter) hinzu gesetzt.

Nun wurden jeweils 10ml Proben der Lösung nach folgenden Rührzeiten gezogen: 0; 0,5; 1; 2; 5; 10; 20; 30; 60; 1200 Minuten.

Von jeder so gezogenen Lösung wurde der Borgehalt analytisch bestimmt. Aus dem Borgehalt der Lösung zu einem gegebenen Zeitpunkt berechnete man die aufgenommene Bormenge pro Liter Harz. Für die Harze aus Beispielen 1 und 2 erhielt man die Werte von Tabelle 1.

**Tabelle 1: Boraufnahmekinetik der borselektiven Harze aus Beispielen 1 und 2**

| | **Aufgenommene Menge an Borsäure (g Bor pro Liter Harz)** | |
|---|---|---|
| Zeit (Min.) | Beispiel 1 (Stand der Technik) | Beispiel 2 (erfindungsgemäß) |
| 0,5 | 2,75 | 2,84 |
| 1 | 4,42 | 4,42 |
| 2 | 5,29 | 5,16 |
| 5 | 6,43 | 6,21 |
| 10 | 7,26 | 7,35 |
| 20 | 7,48 | 8,31 |
| 30 | 7,52 | 8,88 |
| 60 | 7,91 | 9,05 |
| 1200 | 8,04 | 9,01 |

Man erkennt, dass das erfindungsgemäße Harz im Vergleich mit dem Stand der Technik eine höhere Boraufnahmekapazität und eine verbesserte Boraufnahmekinetik besitzt. Nach 30 Minuten Kontaktzeit mit der Borlösung hat das erfindungsgemäße Harz bereits 99% seiner Kapazität von 9 g Bor pro Liter harz erreicht, wobei das Harz nach Stand der Technik nur 93 % seiner niedrigeren Kapazität von 8 g pro Liter Harz erreicht hat. Anders ausgedrückt zeigt das erfindungsgemäße Harz nach 30 Minuten eine im Vergleich zum Stand der Technik um 20 % verbesserte Leistung.

VE-Wasser im Sinne der vorliegenden Erfindung ist gekennzeichnet, indem es eine Leitfähigkeit von 0,1 bis 10µS besitzt, wobei der Gehalt an löslichen Metallionen nicht größer als 1 ppm, bevorzugt nicht größer als 0,5 ppm für Fe, Co, Ni, Mo, Cr, Cu als individuelle Komponenten ist und nicht größer als 10 ppm, bevorzugt nicht größer als 1 ppm für die Summe der genannten Metalle ist.

## Patentansprüche

1. Makroporöse, monodisperse Ionenaustauscher, **dadurch gekennzeichnet, dass** diese N-Methylglucamin-Strukturen enthalten und einen mittleren Durchmesser D zwischen 550 und 750 µm sowie einen Volumenanteil von mindestens 75 % an Perlen zwischen 0,9 D und 1,1 D aufweisen und die Monodispersität durch Sieben heterodisperser Harze, durch Verdüsungs- oder durch Saat-Zulauf-Verfahren erzielt wird.

2. Ionenaustauscher nach Anspruch 1, **dadurch gekennzeichnet, dass** diese ein Gesamtporenvolumen von mindestens 0,1 cm3/g besitzt.

3. Verfahren zur selektiven Adsorption von Bor, **dadurch gekennzeichnet, dass** Ionenaustauscher gemäß einem der Ansprüche 1 oder 2 eingesetzt werden.

4. Verfahren gemäß Anspruch 3, **dadurch gekennzeichnet, dass** Bor aus Flüssigkeiten adsorbiert wird.

5. Verfahren gemäß Anspruch 4, **dadurch gekennzeichnet dass** die Flüssigkeiten Trinkwasser, Meereswasser oder Prozesswasser in oder aus der Elektronikindustrie sind.

6. Verfahren gemäß einem der Ansprüche 3 bis 5, **dadurch gekennzeichnet, dass** Bor für Borsäure oder ihre Salze mit Alkali- oder Erdalkalimetallen steht.
